# EUROPEAN PATENT SPECIFICATION

(11) **EP 2 674 850 B1**
(45) Date of publication and mention of the grant of the patent: **31.08.2016**
(21) Application number: 13170864.6
(22) Date of filing: 06.06.2013
(51) Int. Cl.: G06F 3/0488, G06F 3/01

(54) **Head-mounted display**
Auf einem Kopf montierte Anzeige
Visiocasque

(30) Priority: 13.06.2012 JP 2012133593
(43) Date of publication of application: 18.12.2013
(73) Proprietor: Sony Corporation, Tokyo 108-0075 (JP)
(72) Inventor: Sugita, Naoki, Minato-ku, Tokyo 108-0075 (JP); Tsurumoto, Takashi, Minato-ku, Tokyo 108-0075 (JP); Satoh, Yoshinori, Minato-ku, Tokyo 108-0075 (JP)
(74) Representative: Witte, Weller & Partner Patentanwälte mbB

(56) References cited:
- US-A1- 2010 079 356

## Description

The present disclosure relates to a head-mounted display. Examples of the disclosure relate to a head-mounted video display device which is mounted to a head of a user in order to be utilized in viewing of a video. More particularly, the present disclosure relates to a head-mounted video display device which directly covers right and left eyes of the user to give an immersive feeling to the user.

There is known a head-mounted video display device which is mounted to a head of a user in order to be utilized in viewing of a video. In general, the head-mounted video display device has video display portions corresponding to the right and left eyes of the user, and is configured such that a sense of sight and a sense of hearing can be both controlled by using the head-mounted video display device together with a headphone. In addition, the head-mounted video display device can also display different videos on the right and left eyes of the user. Thus, when images in which there is a parallax in the right and left eyes of the user are displayed in the head-mounted video display device, the head-mounted video display device can present a three-dimensional video.

A high-definition display panel, for example, composed of a liquid crystal element, an organic Electro-Luminescence (EL) element or the like is used in each of the display portions for the right and left eyes of the user. If the head-mounted video display device is configured such that when being mounted to the head of the user, the head-mounted video display device is accompanied by a light blocking property and also directly covers the right and left eyes of the user, the immersive feeling is increased for the user in a phase of the viewing of the video. In addition, if a suitable field angle is set by an optical lens through which a displayed picture is projected and also multiple channels are recreated by the headphone, it is possible to recreate such a realistic sensation as to make the viewing in a movie theater.

Many head-mounted video display devices are connected to AV reproducing apparatuses such as a DVD player and a Blu-ray Disc (BD) player and are then utilized for appreciating the contents. This technique, for example, is described in Japanese Patent Laid-Open No. 2005-86328. Here, in a phase of the viewing, the user needs to issue an instruction such as increasing/decreasing of a second volume of a headphone, start of reproduction of the contents, stop, fast-forward, or fast-rewind to the apparatus.

For example, a proposal was carried out with respect to a head-mounted video display device to which a controller is connected. In this case, the controller, for example, includes a menu button, an up-button and a down-button, a volume dial, and the like. In this case, the menu button is used to carry out display of a menu and decision of an item(s) selected. The up-button and the down-button are used to move a menu item to which attention is paid. Also, the volume dial is used to adjust a sound volume. A technique about such a proposal, for example, is described in Japanese Patent Laid-Open No. 2001-133724. However, in the case of an "immersion type" display device with which the eyes of the user are directly covered, a button manipulation needs to be carried out through the controller in a state of blinder. That is to say, the user who is viewing the contents cannot confirm the position of the button and thus needs to carry out the manipulation by touch. As a result, it is possible that the apparatus is subjected to an incorrect manipulation due to mistake press of the button or the like.

In addition, proposals were carried out with respect to a head-mounted video display device using a touch sensor in a manipulating portion. The techniques about such proposals, for example, are described in Japanese Patent Laid-Open Nos. Hei 11-174987 and 2007-310599. However, in any of the two techniques, since the touch sensor is disposed in a headphone portion on the side surface of the head, there is a trouble with the manipulation carried out in the state of blinder. The user in the state of blinder needs to carry out a manipulation having at least two steps: firstly, a target on the touch sensor is selected by touch; and the manipulation is then carried out, which results in the poor operability. Making addition remark, it is thought that any of the two video display devices has the right-left asymmetrical structure in which the touch sensor is disposed only on one ear side of the right and left ears of the user, and thus right and left weights of the display devices do not become equal to each other. As a result, it is feared that when the head-mounted video display device is mounted to the head of the user, an unnatural load is applied any one of the right and left sides of the head of the user and thus an excessive burden is imposed thereon.

In addition thereto, there is also known a head-mounted video display device on which a guide video of a menu and manipulation buttons with which the adjustment of a video and a sound, and other input manipulations are carried out are displayed so as to be superimposed on an original video by using an On Screen Display (OSD) technique. This sort of head-mounted video display device, for example, is described in Japanese Patent Laid-Open No. 2003-98471. In this case, however, the user himself/herself needs to cause the guide video and the disposition of the actual manipulation buttons to correspond to each other. That is to say, it is true that the user needs to manipulate the buttons and switches for the adjustment in the state of blinder. As a result, it is thought that the manipulation is difficult for the user to carry out.

US2010/0079356A1 describes a head mounted display in which a front panel of a head mounted device can be a touch surface.

### SUMMARY

The present disclosure has been made in order to address the problems, and it is therefore desirable to provide an excellent head-mounted video display device with which right and left eyes of a user are directly covered to give an immersive feeling to the user, and thus the user in a state of blinder can easily manipulate an apparatus.

Various respective aspects and features of the invention are defined in the appended claims. Combinations of features from the dependent claims may be combined with features of the independent claims as appropriate and not merely as explicitly set out in the claims.

According to an illustrative embodiment, the technology of the present disclosure is implemented in a head-mounted display. The head-mounted display includes a display portion; and a touch sensor, wherein the head-mounted display is operable to display a cursor on the display portion at a position determined according to a line of sight between a wearer of the head-mounted display and an object external to the display portion.

As set forth hereinabove, according to the present disclosure, it is possible to provide the excellent head-mounted video display device with which the right and left eyes of the user are directly covered to give the immersive feeling to the user, and thus the user in the state of blinder can easily manipulate the apparatus.

According to an embodiment of the present disclosure, the head-mounted video display device is configured such that the manipulating portion composed of the touch sensor is disposed in the place becoming the front surface of the head when the user mounts the head-mounted video display device to his/her head, and the center line of the line of sight, the cursor, and the manipulating finger lie on the straight line. Therefore, the user can manipulate the touch sensor with such a sense as to touch the displayed video from the back surface, and thus can intuitively manipulate the desired target on the displayed video. That is to say, even when the user cannot visually contact the manipulating portion in the state of blinder, he/she can carry out the intuitive manipulation.

In addition, according to an embodiment of the present disclosure, the manipulation for the device is completed in the operation of one step such that the user touches the desired target on the touch sensor disposed on the front surface of the head. Therefore, the operability is improved. Since the manipulation can be carried out by the lighter touch than that of the mechanical button, it is very rare that the touch manipulation shifts the position of the main body of the device in the head of the user.

In addition, according to an embodiment of the present disclosure, in the head-mounted video display device, the manipulating portion is disposed on the front surface of the main body. Therefore, the head-mounted video display device can be configured such that the device concerned is approximately symmetrical with respect to the right and left sides, and the right and left weights become equal to each other. As a result, it is possible to lighten the burden when the user mounts the head-mounted video display device to his/her head.

In addition, according to an embodiment of the present disclosure, the head-mounted video display device can carry out the depressing pressure and pinch manipulations for the manipulating portion composed of the touch sensor. For example, the head-mounted video display device can also be utilized in the manipulation such as the selection of the hierarchy in the hierarchy Ul, and the depth adjustment in the phase of the three-dimensional image display.

Other features, and advantages of the technique disclosed in this specification will become clear from the detailed description based on an embodiment which will be described later, taken in conjunction with the accompanying drawings.

The invention is defined according to the apparatus of claim 1 and the method of claim 14.

Embodiments of the disclosure will now be described with reference to the accompanying drawings, throughout which like parts are referred to by like references, and in which:
FIG. 1 is a view schematically showing a configuration of an image display system including a head-mounted display device as a head-mounted video display device according to an embodiment of the present disclosure;
FIG. 2 is a view showing a situation in which an overview of an upper surface of a main body of a head-mounted unit shown in FIG. 1 is gotten;
FIG. 3 is a block diagram schematically showing an internal configuration of the head-mounted unit shown in FIG. 1;
FIG. 4 is a perspective view showing a structure of an external appearance of the head-mounted unit shown in FIG. 1;
FIG. 5 is a view showing a situation in which a cursor is placed such that a center line of a line of sight, the cursor, and a manipulating finger lie on a straight line on a displayed video which is obtained through the fusion within a brain of a user;
FIG. 6 is a flow chart showing a processing procedure which the head-mounted unit shown in FIG. 1 carries out;
FIG. 7 is a view showing a structure of a menu picture with which the user carries out a menu manipulation;
FIG. 8 is a view showing a situation in which a shadow of a hand or finger of the user touching a menu is displayed on a menu button in the menu picture;
FIG. 9 is a view showing a situation in which a menu touched by the user is displayed in the form of highlight in the menu picture;
FIG. 10 is a view showing a situation in which a submenu which the menu selected by the user has is pulldown-displayed in the menu picture;
FIG. 11 is a view showing a situation in which the user carries out a vertical manipulation in a state in which a horizontal position of his/her fingertip is fixed to a place where the user indicates his/her desired menu, thereby selecting the submenu in the menu picture;
FIG. 12 is a view showing a structure of a running system picture with which a running system associated manipulation for a video being reproduced is carried out;
FIG. 13 is a perspective view showing a situation in which the user carries out the vertical manipulation in a state in which the horizontal position of his/her fingertip is fixed to a place where the user indicates his/her desired reproduction start position, thereby indicating a sound volume in the video reproducing picture;
FIG. 14 is a flow chart showing a processing procedure which the head-mounted unit shown in FIG. 1 carries out when a video is not being reproduced;
FIG. 15 is a view explaining a method of indicating a reproduction position for preventing a fast-forward/fast-rewind manipulation which the user does not intend on a running system picture;
FIG. 16 is another view explaining a method of indicating a reproduction portion for preventing a fast-forward/fast-rewind manipulation which the user does not intend on a running system picture;
FIG. 17 is still another view explaining a method of indicating a reproduction portion for preventing a fast-forward/fast-rewind manipulation which the user does not intend on a running system picture; and
FIG. 18 is yet another view explaining a method of indicating a reproduction portion for preventing a fast-forward/fast-rewind manipulation which the user does not intend on a running system picture.

An embodiment of the present disclosure will be described in detail hereinafter with reference to the accompanying drawings.

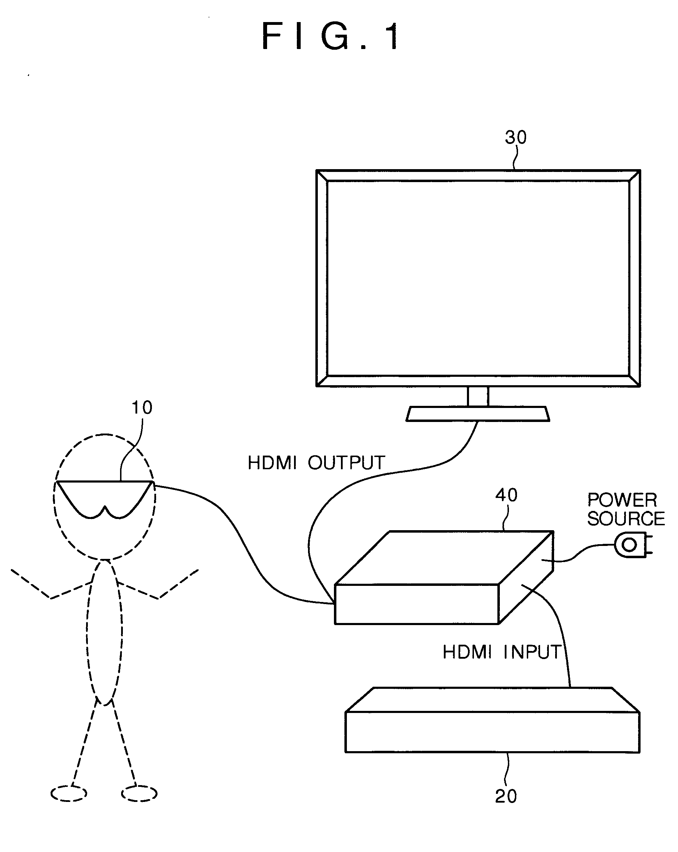

FIG. 1 is a view schematically showing a configuration of an image display system including a head-mounted display device as a head-mounted video display device according to an embodiment of the present disclosure. The image display system shown in FIG. 1 is composed of a Blu-ray disc reproducing apparatus 20 becoming a source of a viewing contents, a front-end box 40, a head-mounted video display device (head-mounted unit) 10 becoming an output destination of reproduced contents from the Blu-ray disc reproducing apparatus 20, and a hi-vision display device (for example, a High-Definition Multimedia Interface (HDMI) compatible television) 30 becoming another output destination of the reproduced contents from the Blu-ray disc reproducing apparatus 20. In this case, the front-end box 40 executes processing for an AV signal outputted from the Blu-ray disc reproducing apparatus 20. One set of head-mounted display device is composed of the head-mounted unit 10, and the front-end box 40.

The front-end box 40 corresponds to an HDMI repeater which, for example, executes signal processing and carries out HDMI output when the AV signal outputted from the Blu-ray disc reproducing apparatus 20 is subjected to HDMI input. Also, the front-end box 40 is also a two-output switcher which switches an output destination of the Blu-ray disc reproducing apparatus 20 over to any one of the head-mounted unit 10 or the hi-vision display device 30. In the case shown in FIG. 1, although the front-end box 40 has two outputs, the front-end box 40 may also have three or more outputs. However, in the front-end box 40, the output destination of the AV signal is made exclusive, and also an output to the head-mounted unit 10 is given a first priority.

It is noted that the HDMI is the interface standards for a digital home electrical appliance which uses Transition Minimized Differential Signaling (TMDS) in a physical layer based on a Digital Visual Interface (DVI) and in which transmission of a sound and a video is mainly made a use application. This system, for example, complies with HDMI1.4.

The Blu-ray disc reproducing apparatus 20 and the front-end box 40, and the front-end box 40 and the hi-vision display device 30 are connected to each other through HDMI cables, correspondingly. Although the front-end box 40 and the head-mounted unit 10 can also be configured so as to be connected to each other through the HDMI cable, the AV signal may be serially transferred by using a cable complying with any other suitable specification. However, it is supposed that both of the AV signal and an electric power are supplied by using one cable through which the front-end box 40 and the head-mounted unit 10 are connected to each other. In this case, the head-mounted unit 10 can obtain a drive electric power as well through this cable.

The head-mounted unit 10 includes a display portion for a right eye and a display portion for a left eye which are independent of each other. Each of the display portions uses a display panel, for example, composed of an organic EL element. In addition, each of the right and left display portions is equipped with an optical eyepiece lens portion (not shown) which has low distortion, a high resolution, and a wide view angle. A video in a displayed panel can be subjected to enlarged projection and thus a wide field angle can be set by using the optical eyepiece lens portion. Also, when multiple channels are recreated, it is possible to recreate such a realistic sensation as to be viewed in a movie theater.

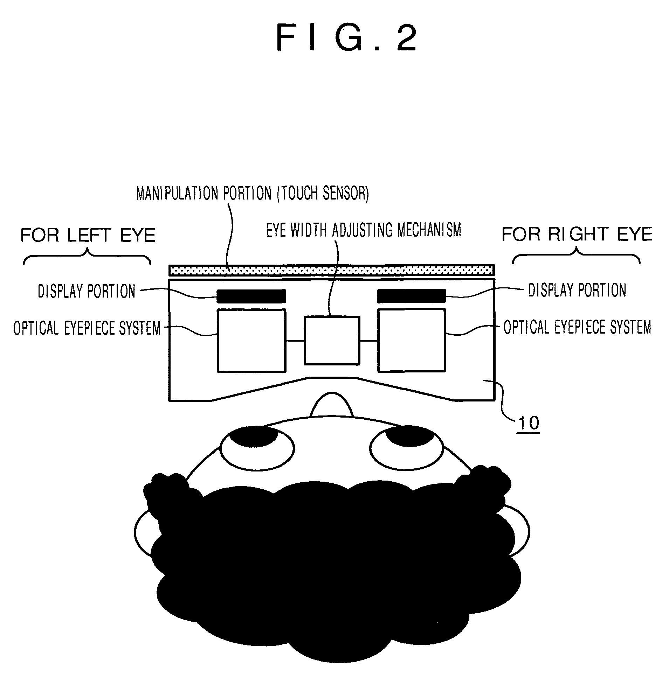

FIG. 2 shows a situation in which an overview of an upper surface of the main body portion of the head-mounted unit 10 is gotten.

The head-mounted unit 10 has right and left independent optical systems. On the other hand, since the height of the eye and the eye width are different with each person every user, it is necessary to align the optical systems and the eyes of the user to which the head-mounted unit 10 is mounted with each other. For this reason, the main body portion of the head-mounted unit 10 is equipped with an eye width adjusting mechanism for adjusting the eye width between the display portion for the right eye and the display portion for the left eye.

In addition, the feature of the embodiment is that the head-mounted unit 10 is equipped with a manipulating portion which is composed of a touch sensor and which is laid approximately over the entire front surface of the head-mounted unit 10. The manipulating portion is located approximately on a back surface side of the right and left display portions. With the touch sensor, the sensing can be carried out by lighter touch than that of a physical button. Therefore, it is very rate that the main body of the head-mounted unit 10 which is being mounted to the head of the user is shifted from the mounting position.

Here, the right and left display portions may display cursor(s) in position(s) corresponding to places where the manipulating portion is touched. At this time, when the cursor is placed such that a center line of a line of sight, the cursor, and the manipulating finger lie on a straight line, the user can search for a desired target with such a sense as to touch a displayed video from a back surface.

When the manipulating portion is disposed on the front surface of the device main body, the main body of the head-mounted unit 10 can be configured such that it is approximately symmetrical with respect to the right and left sides, and right and left weights become equal to each other as compared with the case where the manipulating portion, for example, is placed in one of the right and left headphone portions (refer to Japanese Patent Laid-Open Nos. Hei 11-174987 and 2007-310599. Therefore, when the user mounts the head-mounted unit 10 to his/her head, the burden can be lightened such that the head is prevented from being inclined horizontally.

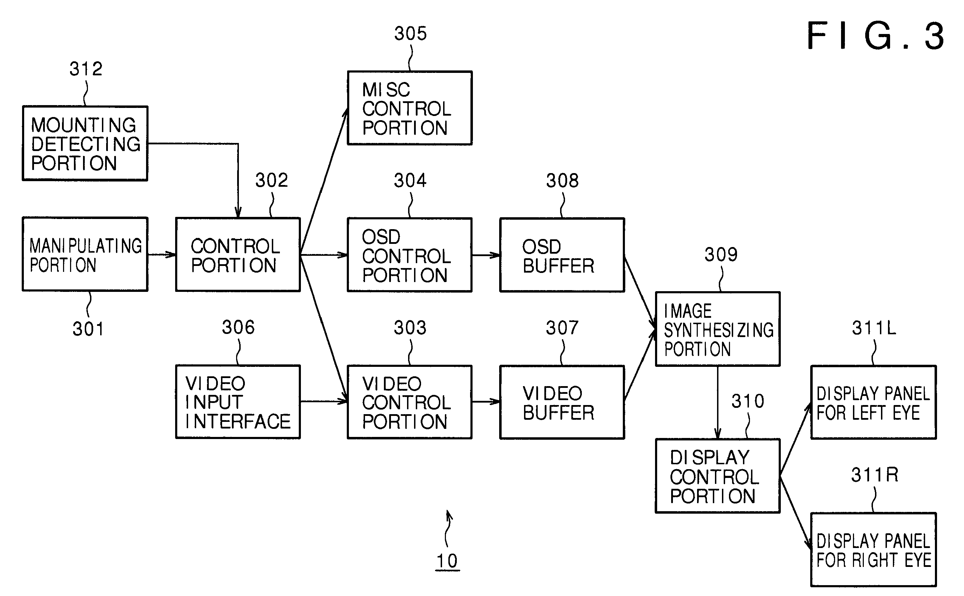

FIG. 3 schematically shows an internal configuration of the head-mounted unit 10. Hereinafter, individual portions composing the head-mounted unit 10 will be described.

A manipulating portion 301 is composed of a touch sensor which is laid approximately over the entire front surface of the head-mounted unit 10. Also, the manipulating portion 301 outputs data on a coordinate position of a place which the user touches with his/her fingertip as manipulation information. The touch sensor, for example, is composed of an electrostatic capacitance type device and can detect a depressing pressure as well and outputs similarly data on the depressing pressure as the manipulation information. In addition, a touch manipulation using two or more fingers can also be carried out for the touch sensor at the same time, and outputs data on the touch manipulation as the manipulation information. In addition, the manipulating portion 301 may include manipulation elements such as a button and a key (for example, a power source button and an arrow key (both not shown)) in addition to the touch sensor.

A control portion 302 generally controls an operation within the head-mounted unit 10 in accordance with the manipulation information inputted thereto through the manipulating portion 301. Specifically, the control portion 302 instructs a video control portion 303 to process a video signal, instructs an On-Screen Display (OSD) control portion 304 to draw an OSD picture, and instructs a MISC control portion 305 to carry out other various intra-apparatus operations.

A video input interface 306 inputs the video signal reproduced and outputted from the Blu-ray disc reproducing apparatus 20 (refer to FIG. 1) through the front-end box 40. The video control portion 303 carries out image quality adjustment and other pieces of signal processing for the video signal inputted thereto in accordance with an instruction issued thereto from the control portion 302, and writes the resulting video signal to a video buffer 307. In addition, the control portion 302 instructs the video control portion 303 to draw the cursor within the video based on the manipulation information from the manipulating portion 301.

The OSD control portion 304 draws an OSD picture which is to be superimposed on the original video in accordance with the information transmitted thereto from the control portion 302, and then writes the video data on the resulting picture to an OSD buffer 308. The OSD picture contains therein one or more menu buttons which the user selects through the manipulating portion 301 such as the touch sensor, a submenu which is pulled down from the menu button, language information therefor, and the like.

The MISC control portion 305 carries out control other than the OSD control and the video control in accordance with the information transmitted thereto from the control portion 302.

An image synthesizing portion 309 superimposes the OSD picture which is written to the OSD buffer 308 on the video data written to the video buffer 307, and outputs the resulting video signal to a display control portion 310.

The display control portion 310 separates the video signal inputted thereto into a video signal for the right eye, and a video signal for the left eye, and controls the drawing for a display panel 311 R for the right eye and a display panel 311 L for the left eye.

Each of the display panel 311 R for the right eye, and the display panel 311 L for the left eye, for example, is composed of a display device such as an organic EL element or a liquid crystal display element. In addition, the display panel 311 R for the right eye, and the display panel 311 L for the left eye are correspondingly equipped with optical eyepiece lens portions (not shown) for subjecting videos to enlarged projection. The right and left optical eyepiece lens portions are composed of combinations of plural lenses, correspondingly, and optically process the videos which are displayed on the display panel 311 R for the right eye and the display panel 311 L for the left eye. The images which are displayed on light emission surfaces of the display panel 311 R for the right eye, and the display panel 311 L for the left eye are enlarged when they pass through the optical eyepiece lens portions, correspondingly, and images large virtual images on retinas of the right and left eyes of the user. Also, the video for the right eye, and the video for the left eye are fused within the brain of the observing user.

A mounting detecting portion 312 detects whether or not the head-mounted unit 10 is set in a state in which it is mounted to the head of the user. A method and a mechanism for the detection are arbitrarily adopted. For example, it is possible to utilize a sensor (not shown) for detecting the head of the user in a contact or non-contact style, a mechanical switch (not shown) for physically detecting abutment of the head of the user or the like.

When the manipulating portion 301, as described above, is composed of the touch sensor which is laid approximately over the entire front surface of the main body of the head-mounted unit 10, it is possible that the hand or finger of the user touches the touch sensor while the user detaches the head-mounted unit 10 from his/her head as well as while the user mounts the head-mounted unit 10 to his/her head. Thus, it is feared that while the user does not mount the head-mounted unit 10 to his/her head, the user touches the touch sensor by mistake, thereby causing either a malfunction or an operation which the user does not intend. In order to cope with such a situation, while the mounting detecting portion 312 detects the non-mounting state of the head-mounted unit 10, the control portion 302 either may stop the input of the manipulation information from the manipulating portion 301, or may stop the control corresponding to the manipulation information.

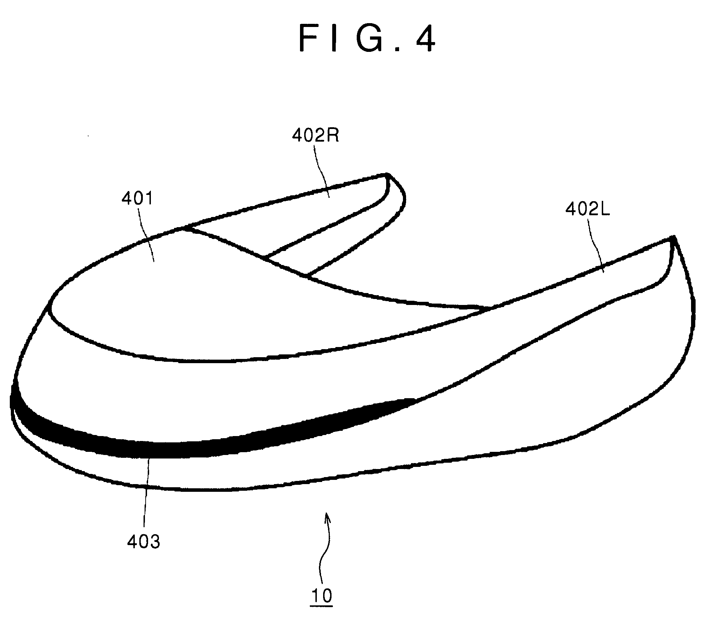

FIG. 4 shows a structure of an external appearance of the head-mounted display device 10. The head-mounted display device 10 shown in FIG. 4 is composed of a mechanism similar to that of glasses for visual correction. Also, the head-mounted display device 10 is composed of a main body portion 401 and a pair of temple portions 402R and 402L. In this case, the main body portion 401 accommodates therein almost all of the circuit components shown in FIG. 3. Also, the paired temple portions 402R and 402L protrude backward from the right and left back end portions of the main body portion 401, and are mounted to auricles of the user.

The right and left optical lens portions appear on the back surface of the main body portion 401 (not shown in FIG. 4). Thus, lights of the videos which are displayed on the display panel 311 R for the right eye and the display panel 311 L for the left eye can be observed through the right and left optical lens portions, respectively.

When the user mounts the head-mounted unit 10 shown in the figure to his/her head, the back surface of the main body portion 401 directly covers the right and left eyes, thereby blocking the outside light. Therefore, the immersive feeling is increased in the phase of the viewing of the video, and it is possible to recreate such a realistic sensation as to be viewed in the movie theater.

However, in the technique disclosed in this specification, how the head-mounted unit 10 is configured is not essential. For example, the present disclosure is by no means limited to the mechanism in which the right and left temple portions 402R and 402L are mounted to the auricles of the user, to be mounted to the head of the user. That is to say, like a monitor television receiver with a headphone disclosed in Japanese Design Registration No. 1438218, the head-mounted unit 10 may have a mechanism with which the head-mounted unit 10 is fixed to the head of the user such that the belt pulls across the back of the head of the user.

In the technique disclosed in this specification, one of the important points is that a touch sensor 403 is laid horizontally over the front surface of the head-mounted unit 10. The touch sensor 403 is the main constituent part or component of the manipulating portion 301 described above.

The touch sensor 403 is located approximately on the back surface of the display surfaces, for observation of the displayed video, of the display panel 311 R for the right eye and the display panel 311 L for the left eye. Since the touch sensor 403 can carry out the sensing with the lighter touch than that of the physical button, the main body of the head-mounted unit 10 is prevented from being shifted from the mounting position by the touch manipulation made by the user.

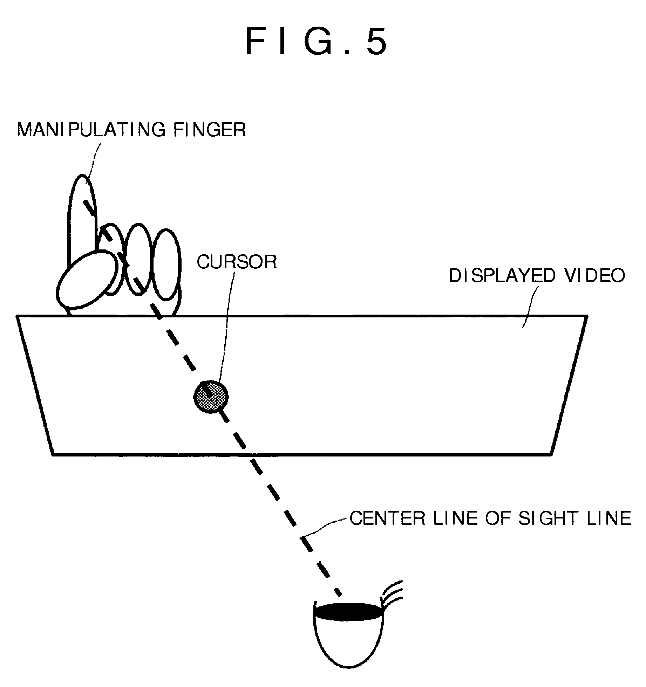

For example, when the cursor is displayed in the position corresponding to the place where the touch sensor 403 is touched on the display panel 311 R for the right eye and the display panel 311 L for the left eye, as shown in FIG. 5, if the cursor is placed such that a center line of a line of sight, the cursor, and the manipulating finger lie on a straight line (on the displayed video which is obtained through the fusion in the brain of the user), the user can search for a desired target with such a sense as to touch a displayed video from a back surface.

That is to say, even when the user cannot visually contact the manipulating portion in the state like the blinder, he/she can carry out the intuitive manipulation. In addition, the manipulation for the head-mounted unit 10 is completed in the operation of one step such that the user touches the desired target on the touch sensor disposed on the front surface of the head of the user. Therefore, there is a merit that the operability is improved. It is possible to carry out the depressing pressure and the pinch operation for the manipulating portion composed of the touch sensor. For example, it is also possible to carry out the intuitive manipulation such that a depth in the phase of the three-dimensional video display can be adjusted in correspondence to the depressing pressure against the touch sensor.

In addition, when the manipulating portion 301 which is composed of the touch sensor 403, and which is approximately symmetrical with respect to the right and left sides is disposed on the front surface of the main body of the head-mounted unit 10, the main body of the head-mounted unit 10 can be configured such that it is approximately symmetrical with respect to the right and left sides, and right and left weights become equal to each other as compared with the case where the manipulating portion, for example, is placed in one of the right and left headphone portions (refer to Japanese Patent Laid-Open Nos. Hei 11-174987 and 2007-310599. Therefore, when the user mounts the head-mounted unit 10 to his/her head, the burden can be lightened such that the head is prevented from being inclined horizontally.

As shown in FIG. 4, when the touch sensor 403 is laid horizontally over the front surface of the main body portion 401, there are many opportunities in which the hand or finger of the user touches the touch sensor while the user detaches the head-mounted unit 10 from his/her head as well as while the user mounts the head-mounted unit 10 to his/her head. For the purpose of preventing in the non-mounting state of the head-mounted unit 10, the user from carelessly touching the touch sensor and the head-mounted unit 10 from causing either the malfunction or the operation which the user does not intend, only in the mounting state of the head-mounted unit 10, the touch sensor 403 may also be set valid, and in the non-mounting state, the head-mounted unit 10 may also not response to the manipulation for the touch sensor 403. For this reason, in the embodiment of the present disclosure, the head-mounted unit 10, as described above, is equipped with the mounting detecting portion 312.

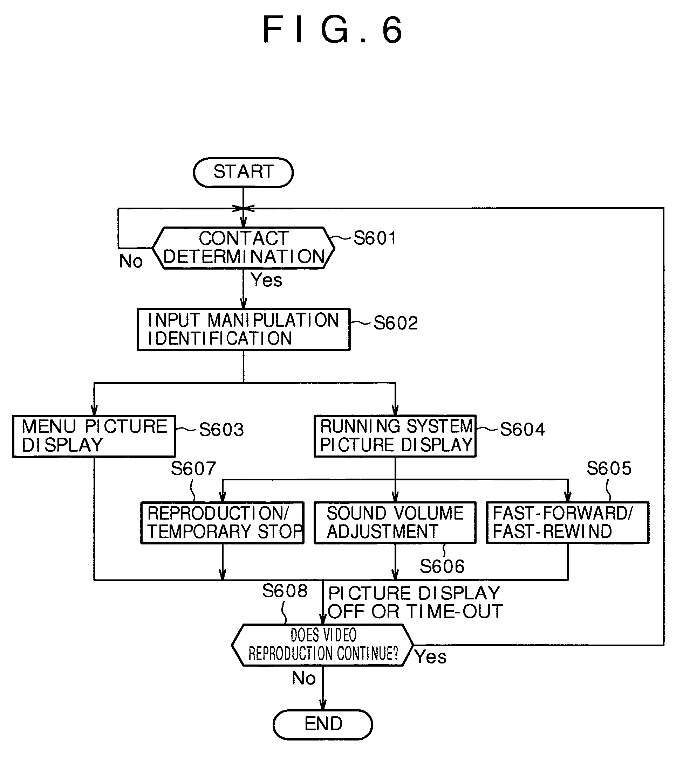

A processing procedure which is carried out while the head-mounted unit 10 reproduces and displays an outside video which is fetched in from the video input interface 306 is shown in the form of a flow chart in FIG. 6.

The control portion 302 carries out a contact determination (Step S601), and waits until the user touches the touch sensor 403 composing the manipulating portion 301 (No: Step S601).

Also, when it is detected that the user has touched the touch sensor 403 (Yes: Step S601), the control portion 302 identifies the input manipulation (Step S602), and changes the pictures to be displayed on the right and left display panels 311 R and 311 L in accordance with the input manipulation.

As far as the subject matter of the technique disclosed in this specification, what kind of input manipulation is identified, and what pictures are displayed in correspondence to the kind of input manipulation identified are especially by no means limited. It is supposed that in the flow chart shown in FIG. 6, the inputs of a long pressing manipulation and a tap manipulation are identified in the processing in Step S602. Also, it is supposed that in a phase of the long pressing manipulation for a given time or more, menu pictures with which the user will carry out the menu manipulation are displayed on the right and left display panels 311 R and 311 L (Step S603). In addition, it is supposed that in a phase of the tap manipulation, a running system picture is displayed with which an instruction for fast-forward, first-rewind, a reproduction position (including an instruction for reproduction start and temporary stop) of the displayed video is carried out by using a seek bar (Step S604).

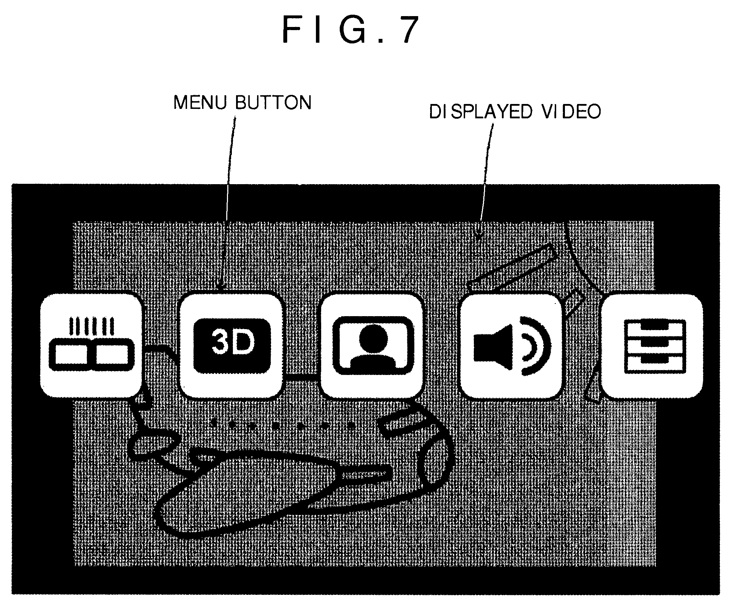

FIG. 7 shows a structure of a menu picture with which the user carries out the menu manipulation. As shown in the figure, the menu picture during the video reproduction is semitransparent and is displayed so as to be superimposed on the original video (outside video). The menu picture is composed of plural menu buttons. It is noted that when the menu picture is desired to be made to appear during the video reproduction, the control portion 302 may temporarily stop the video being reproduced in order to prevent the viewing from being impeded.

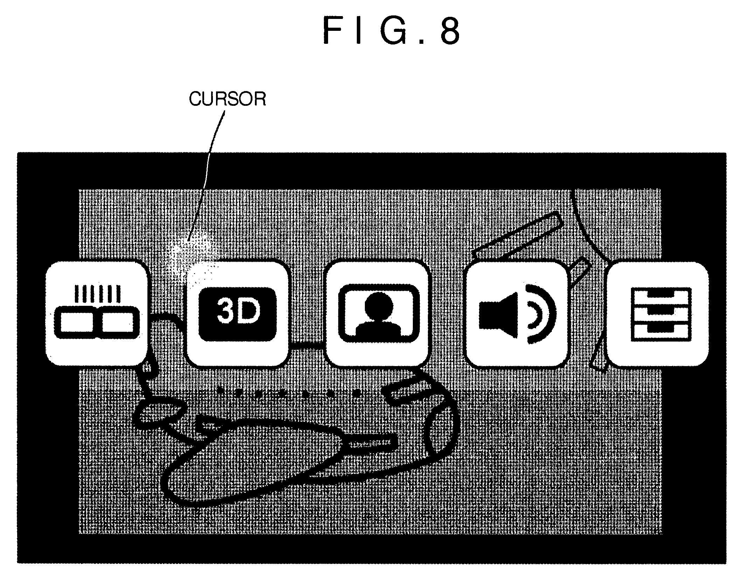

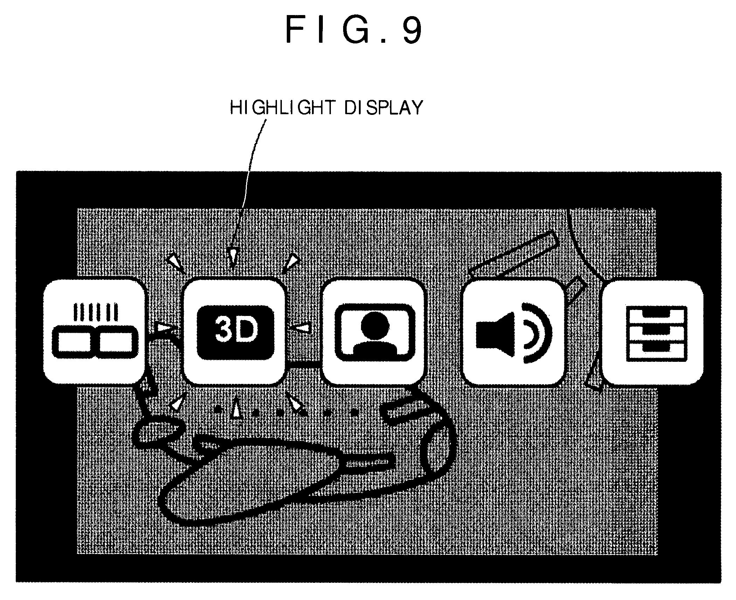

The cursor for clearly specifying the position where the user touches on the touch sensor 403 may be displayed on the picture. In the case shown in FIG. 8, the cursor resembling the shadow of the hand or finger of the user with which the picture is touched is displayed on the menu button (the "3D" menu button in the case shown in the figure). Instead of displaying the cursor, as shown in FIG. 9, the menu which the user touches may also be displayed in the form of highlight.

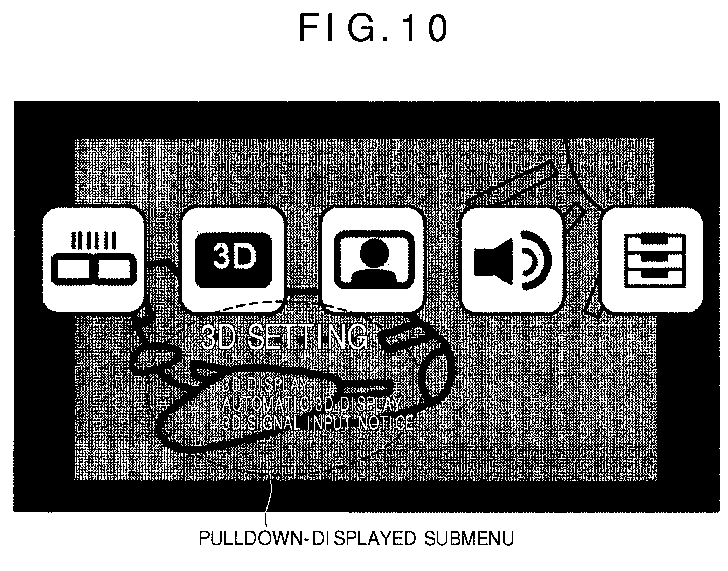

In the case of a hierarchy User Interface (UI) such that the menu contains therein a submenu, in response to the user's operation selecting a certain menu (or touches a certain menu with his/her hand or finger), the submenu menu may be further pulldown-displayed. FIG. 10 shows a situation in which in response to the user's operation touching the menu of "3D SETTING," the submenu thereof is pulldown-displayed. In the case shown in the figure, as surrounded by a dotted line, "3D DISPLAY," "AUTOMATIC 3D DISPLAY," and "3D SIGNAL INPUT NOTICE" appear as submenu items downward in the selected menu.

As shown in FIGS. 8 and 9, when the menus are horizontally disposed in a line, the control portion 302 can identify which of the menus is selected on the basis of the horizontal position of the touch sensor 403 where the user touches. In other words, the user can indicate the desired menu by horizontally manipulating his/her fingertip on the touch sensor 403.

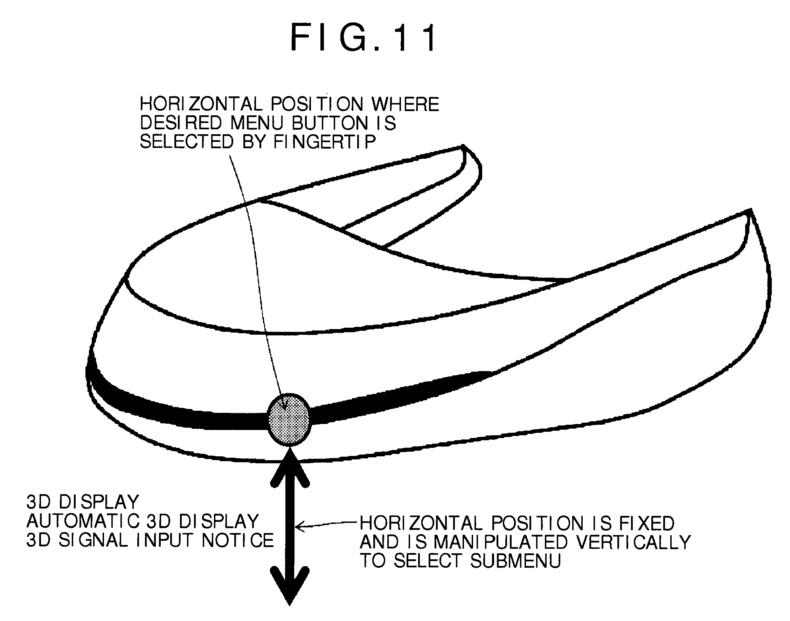

In addition, as shown in FIG. 10, when the submenus are disposed toward the up and down direction, that is, the vertical direction of the selected menu, the control portion 302 can identify which of the menu items in the pulldown menu is selected on the basis of the vertical position of the touch sensor 403 where the user touches. In other words, the user keeps the horizontal position of his/her fingertip fixed to the place where the desired menu is indicated on the touch sensor 403, and manipulates vertically his/her fingertip next time, thereby making it possible to carry out the selecting manipulation within the pulldown menu. FIG. 11 shows a situation in which in a state in which the user fixes the horizontal position of his/her fingertip to the place where the user indicates the desired menu on the touch sensor 403, the user vertically manipulates the horizontal position of his/her fingertip, thereby indicating the desired submenu.

When the touch sensor 403, as previously stated, for example, is composed of the electrostatic capacitance type device, and can also detect the depressing pressure, the hierarchy of the hierarchy UI can be detected based on the depressing pressure. For example, the submenus having stages corresponds to the depressing pressure can be selected. Or, when the touch manipulation using two or more fingers at the same time is possible, the hierarchy of the hierarchy UI can be selected depending on a length of a distance between the two fingers. In addition, in the phase of the display of the three-dimensional video, the user can indicate the depth adjustment of the three-dimensional video based on the depressing pressure for the touch sensor 403, and the distance between the two fingers.

The description with respect to the processing procedure which is carried out in the head-mounted unit 10 will be continuously given again with reference to FIG. 6.

In response to the identification of the tap manipulation on the touch sensor 403 in the processing in Step S602, the display pictures of the right and left display panels 311 R and 311 L are switched over to the running system picture (Step S604). A running system associated manipulations relating to the video being reproduced such as the fast-forward/fast-rewind (Step S605), the sound volume adjustment (Step S606), and the reproduction/temporary stop (Step S607) are carried out in the running system picture.

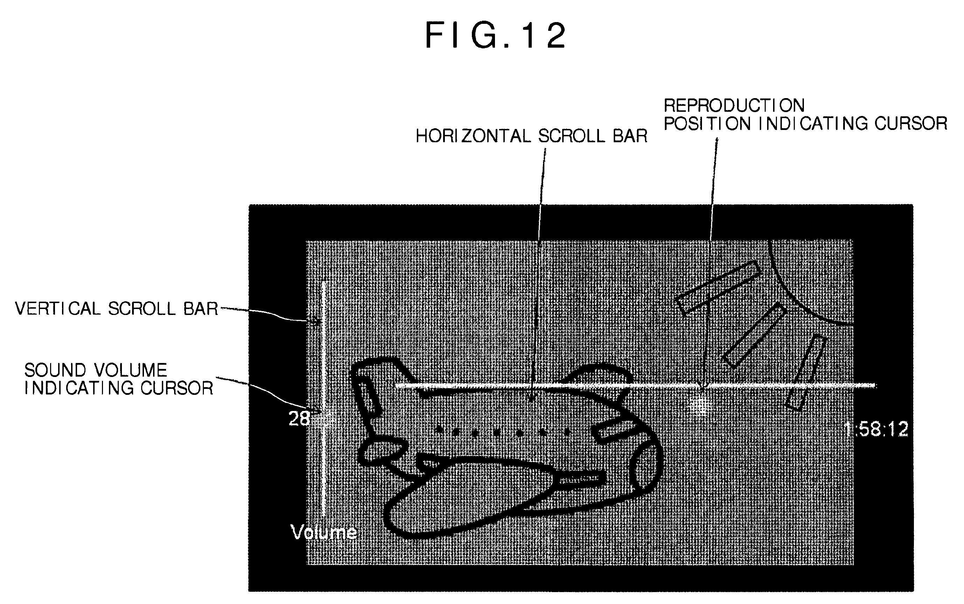

FIG. 12 shows a structure of the running system picture. A horizontal scroll bar (seek bar) which is used to seek the reproduction position, and a vertical scroll bar which is used to adjust the sound volume of the reproduced video are both displayed on the running system picture shown in the figure. A reproduction position indicating cursor is placed in a place corresponding to the current reproduction position on the horizontal scroll bar. Also, a numerical value representing the current reproduction position (reproduction time) is displayed in the vicinity of the right end of the horizontal scroll bar. In addition, a sound volume indicating cursor is placed in a place corresponding to the sound volume currently set on the vertical scroll bar. Also, a numerical value representing the current sound volume level is displayed in the vicinity of the left side of the vertical scroll bar.

As shown in FIG. 12, when the horizontal scroll bar indicating the reproduction position is disposed, the control portion 302 moves the reproduction start position of the video by following the horizontal manipulation on the touch sensor 403 made by using the hand or finger of the user. In other words, the user horizontally manipulates his/her fingertip on the touch sensor 403 to move the cursor on the horizontal scroll bar, thereby making it possible to indicate the desired reproduction start position.

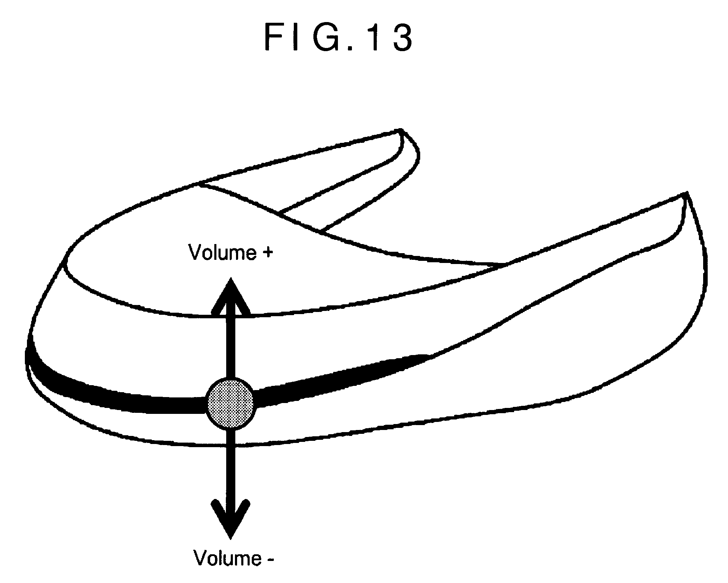

In addition, as shown in FIG. 12, when the vertical scroll bar is disposed with which the sound volume of the reproduced video is adjusted, the control portion 302 adjusts the sound volume by following the vertical manipulation on the touch sensor 403 made by using the hand or finger of the user. In other words, the user keeps the horizontal position of his/her fingertip fixed to the place where the desired menu is indicated on the touch sensor 403, and manipulates vertically his/her fingertip next time to move the cursor on the vertical scroll bar, thereby making it possible to set the desired sound volume. FIG. 13 shows a situation in which in a state in which the user fixes the horizontal position of his/her fingertip to the place where the user identifies the desired reproduction start position on the touch sensor 403, the user vertically manipulates the horizontal position of his/her fingertip, thereby indicating the desired sound volume.

When the touch sensor 403, as previously stated, for example, is composed of the electrostatic capacitance type device, and can also detect the depressing pressure, the magnitude of the sound volume can be indicated based on the depressing pressure. Or, when the touch manipulation using the two or more fingers at the same time is possible, the sound volume can be indicated based on the distance between the two fingers.

After that, in the case where the user instructs the display-OFF of the menu picture or the running system picture, or the time-out is carried out because there is no input manipulation made by the user on each of the pictures, when the reproduction of the outside video continues (Yes: Step S608), the operation returns back to the processing in Step S601, and the same predetermined pieces of processing as those described above are repetitively executed. In addition, when the reproduction of the outside video is stopped (No: Step S608), the entire processing routine ends.

Subsequently, a description will now be given with respect to malfunction prevention for the touch sensor 403. For the touch sensor 403, the input manipulation can be carried out even with a weaker force than that in the physical button. On the other hand, there is the possibility that the user carelessly touches the touch sensor 403 to carry out the unintended input manipulation, thereby leading the head-mounted unit 10 to the malfunction.

For example, there is given the malfunction for the touch sensor 403 in the state in which the user does not mount the head-mounted unit 10 to his/her head. It is possible that even while the user detaches the head-mounted unit 10 from his/her head, the hand or finger of the user touches the touch sensor. It is feared that the touch manipulation to the touch sensor 403 which is carried out while the head-mounted unit 10 is not mounted to the user's head is basically the manipulation which the user does not intend, which may cause the malfunction of the device. The reason for this is because while the user detaches the head-mounted unit 10 from his/her head, the user cannot visually contact the pictures of the display panel 311 R for the right eye and the display panel 311 L for the left eye, and thus cannot carry out the manipulation through the touch sensor 403 as shown in FIGS. 8 to 13.

In order to cope with such a situation, in the embodiment of the present disclosure, only for a period of time for which the user mounts the head-mounted unit 10 to his/her hand, the input from the touch sensor 403 is made valid, thereby preventing the malfunction in the non-mounting state of the head-mounted unit 10. That is to say, while the mounting detecting portion 312 detects that the head-mounted unit 10 is held in the non-mounting state, the control portion 302 stops the input of the manipulation information from the touch sensor 403 or stops the device control corresponding to the manipulation information from the touch sensor 403. Also, the mounting detecting portion 312 detects that the head-mounted unit 10 is held in the mounting state, the control portion 302 carries out the input of the manipulation information from the touch sensor 403, and carries out the device control corresponding to the touch manipulation made by the user.

In addition, even in the state in which the user mounts the head-mounted unit 10 to his/her head, there is the possibility that during the period of time for which the outside video is not reproduced and displayed, the user carelessly touches the touch sensor 403 to carry out the unintended input manipulation, thereby leading the head-mounted unit 10 to the malfunction.

In order to cope with such a situation, in the embodiment of the present disclosure, the head-mounted unit 10 with which the video is not being reproduced causes the user to carry out a preliminary manipulation representing that the user has the will to carry out the input manipulation for the touch sensor 403. The normal input manipulation for the touch sensor 403 can be conducted after completion of the preliminary manipulation. In such a manner, the control portion 302 disregards the input manipulation for the touch sensor 403 before the preliminary manipulation is carried out, thereby removing the fear that the malfunction is caused.

A concrete example of the preliminary manipulation is a long pressing manipulation for a given time or more for the touch sensor 403. It is thought that since the user may incautiously, instantly touch the touch sensor 403, but he/she does not continue to touch the touch sensor 403 for a long time with no intention, it is possible to confirm the will of the user by the long pressing manipulation.

In addition, it also is supposed that even when once the input manipulation for the touch sensor 403 is made valid by the preliminary manipulation, after that, the user losses the will to carry out the input manipulation for the touch sensor 403. In such a case, the user leaves the touch sensor 403 as it is without touching the touch sensor 403 for a long time. Also, even when the user touches the touch sensor 403 in such a leaving state, this touch is thought to be unintended malfunction. Then, when the input manipulation for the touch sensor 403 has lost for a given time or more, the control portion 302 locks the touch sensor 403, thereby removing the fear that the malfunction is caused.

In addition, when the lock of the touch sensor 403 is desired to be released, the user is requested to carry out the manipulation of will confirmation to release the lock, and the normal input manipulation for the touch sensor 403 is restarted through the will confirmation manipulation. In such a manner, the control portion 302 locks the input manipulation for the touch sensor 403 which becomes the leaving state because it may be impossible to confirm the will of the user, thereby removing the fear that the malfunction is caused.

A concrete example of the will confirmation manipulation is a specific gesture manipulation for the touch sensor 403. It is thought that the user may unconsciously touch the touch sensor 403 (or due to his/her everyday finger habit) to carry out the some sort of manipulation, but does not carry out the specific gesture manipulation without the intention, and thus it is possible to confirm the will of the user by the specific gesture manipulation.

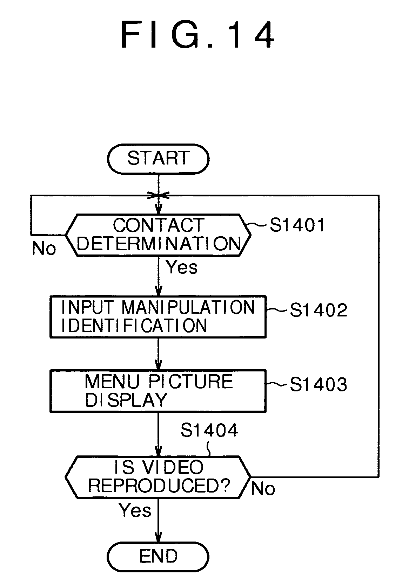

A processing procedure which is carried out when the head-mounted unit 10 is not in reproducing the video is shown in the form of a flow chart in FIG. 14.

The control portion 302 carries out the contact determination (Step S1401) and waits until the preliminary manipulation for long pressing the touch sensor 403 composing the manipulating portion 301 for a given time or more is carried out by the user, thereby confirming that the user has the will to start the input to the touch sensor 403 from now.

Also, when it is confirmed that the preliminary manipulation for long pressing the touch sensor 403 for a given time or more is carried out by the user (Yes: Step S1401), the control portion 302 identifies the input manipulation which is continuously carried out for the touch sensor 403 (Step S1402). Here, when the lock function of the touch sensor 403 is held valid, the control portion 302 identifies whether or not the input manipulation is the specific gesture manipulation for the lock releasing.

Next, the menu pictures with which the user carries out the menu manipulation are displayed on the right and left display panels 311R and 311 L in accordance with the input manipulation thus identified (Step S1403).

After that, when the user instructs the display-OFF of the menu picture, or the time-out is carried out because there is no input manipulation made by the user on the menu picture, the control portion 302 checks to see if the reproduction of the video (the outside video taken in from the video input interface 306) is started (Step S1404). When the reproduction of the video is not started, the operation returns back to the processing in Step S1401 (No: Step S1404), and the predetermined pieces of processing described above are repetitively executed. On the other hand, when the reproduction of the video is started (Yes: Step S1404), the entire processing routine concerned ends.

Note that, in the processing procedure shown in FIG. 14, until the menu picture is displayed, the will of the user is confirmed in accordance with the manipulation of the two steps: the contact determination based on the long processing operation; and the lock release based on the gesture manipulation. However, the menu picture may also be displayed only in one step of the long pressing operation or the gesture manipulation for further simplifying the manipulation for the will confirmation.

In addition, it is feared that even when the user carries out the identical manipulation for the touch sensor 403, since the user cannot manipulate the precise position with his/her hand or finger, the head-mounted unit 10 is led to the malfunction.

For example, when the head-mounted unit 10 is reproducing the outside video, the running system picture with which the running system associated manipulation for the video being reproduced is carried out as shown in FIG. 12 is displayed on the right and left display panels 311R and 311L. The horizontal scroll bar (seek bar) with which the reproduction position is sought is displayed on the running system picture. Thus, the user horizontally manipulates his/her fingertip on the touch sensor 403 to move the cursor in the horizontal scroll bar, thereby seeking the desired reproduction start position.

In such a seeking manipulation, when the user roughly recognizes the current reproduction position on the horizontal scroll bar, firstly, the user touches the vicinity of the current reproduction position with his/her hand or finger to intend to grasp the reproduction position indicating cursor. However, it is difficult to precisely touch the current reproduction position on the horizontal scroll bar. For this reason, it is feared that the user firstly touches a position derived from the current reproduction position with his/her hand or finger to cause the manipulation for fast-forward or fast-rewind which the user does not intend between the current reproduction position and the firstly touched position.

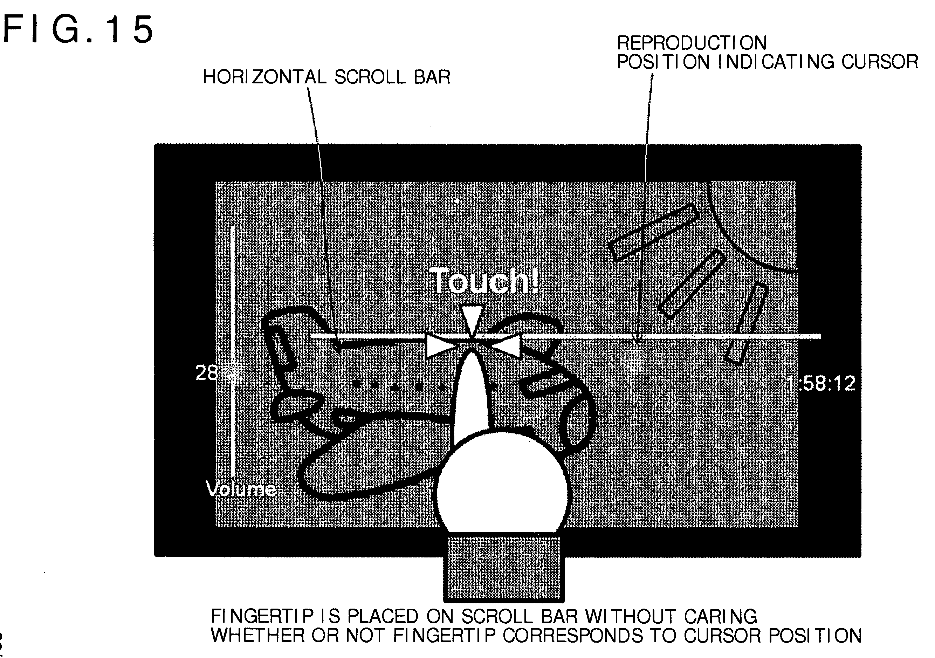

One method of avoiding the malfunction following the deviation of the firstly touched position will be described below with reference to FIGS. 15 to 18.

FIG. 15 shows a situation in which the user firstly touches the running system picture. In the case shown in the figure, the user places his/her fingertip in a position away from the reproduction position indicating cursor indicating the current reproduction position on the horizontal scroll bar. At this time point, the control portion 302 treats the indication of the reproduction position by the user as not being completed. Therefore, the position of the reproduction position indicating cursor on the horizontal scroll bar is not also changed.

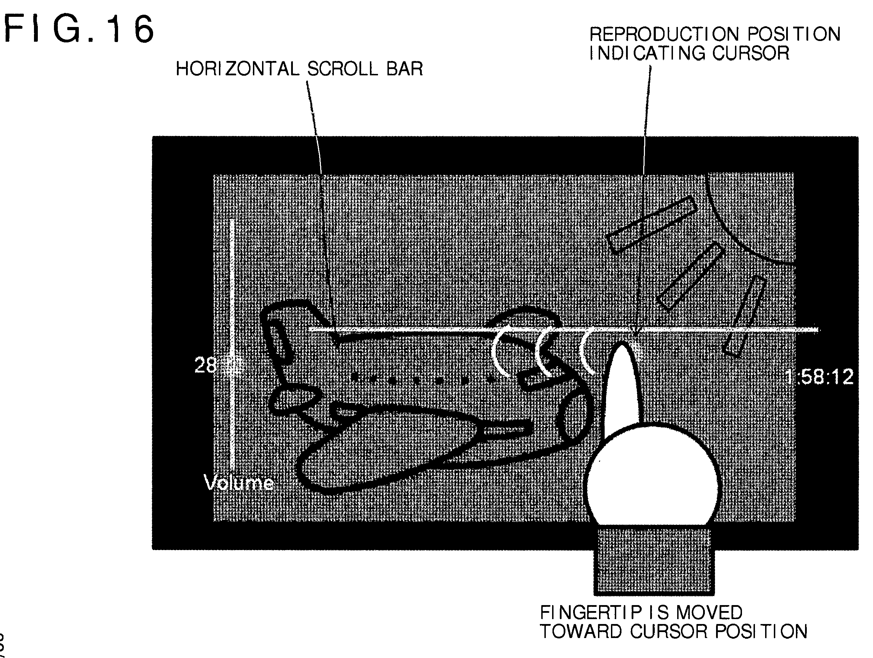

FIG. 16 shows a situation in which the user seeks the reproduction position on the running system picture. As shown in the figure, the user is going to move his/her fingertip on the surface of the touch sensor 403 so as to trace the horizontal scroll bar. Also, the position of the fingertip reaches the reproduction position indicating cursor on the horizontal scroll bar.

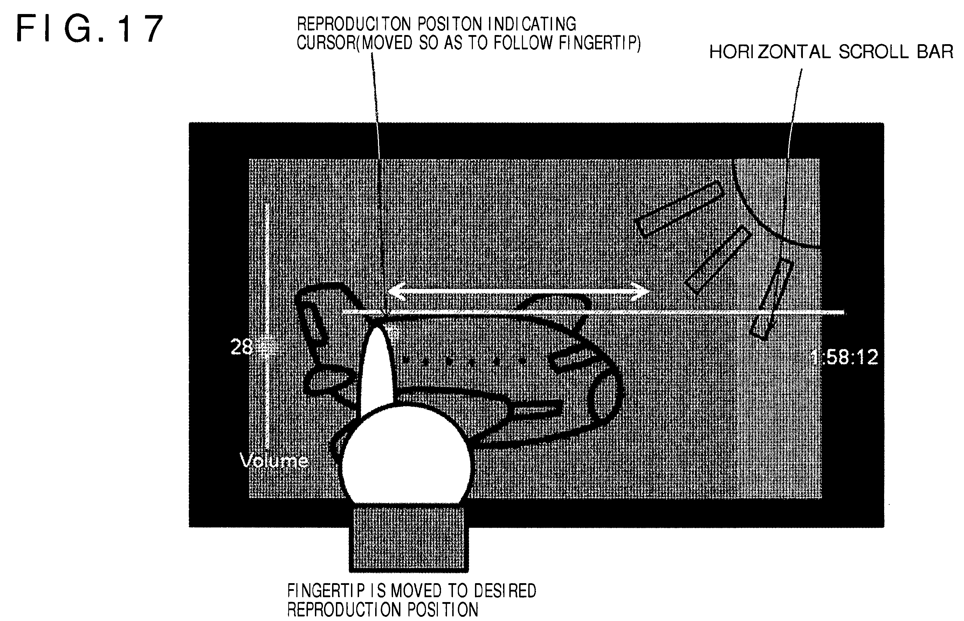

Once the position of the fingertip of the user touches the reproduction position indicating cursor, the reproduction position indicating cursor is gotten hang up the fingertip of the user. After that, the reproduction position indicating cursor moves on the horizontal scroll bar so as to follow the movement of the fingertip of the user as shown in FIG. 17.

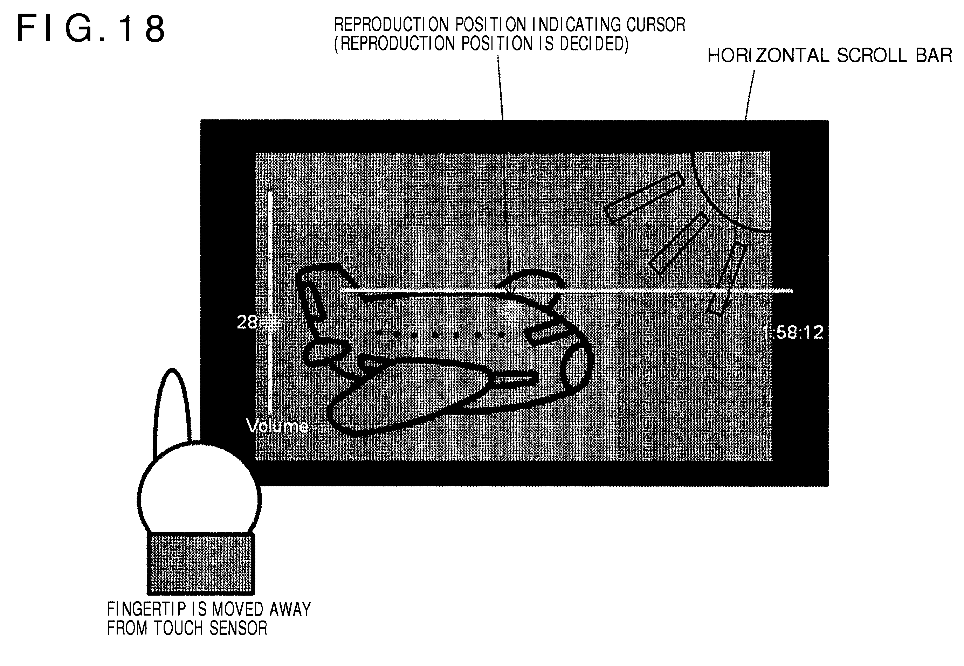

Also, when the user separates his/her fingertip from the touch sensor 403 as shown in FIG. 18, the position where the reproduction position indicating cursor is placed at that time point is decided as the reproduction position, and thus the control portion 302 carries out the control such that the outside video is started to be reproduced in that reproduction position.

According to the manipulating method shown in FIGS. 15 to 18, the malfunction such as the fast-forward or the fast-rewind following the deviation of the firstly touched position is prevented, whereby the reproduction of the video can be started from the reproduction position which the user desires. In addition, the user can start the manipulation for seeking the reproduction position without caring whether or not the fingertip corresponds to the current cursor position.

As has been described so far, according to the technique disclosed in this specification, in the head-mounted unit 10, the touch sensor 403 is disposed on the side opposite to the right and left display panels 311 R and 311 L, that is, in the position becoming the front surface of the head of the user. Therefore, the user manipulates the touch sensor in the sense of touching the displayed video from the back surface and thus can intuitively manipulate the desired target on the displayed video.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

## Claims

1. A head-mounted display, comprising:
a display portion and a touch sensor;
**characterised in that** the head-mounted display is operable to display a cursor on the display portion at a position determined according to a line of sight between a wearer of the head-mounted display and an object external to the display portion.

2. The head-mounted display as recited in claim 1, wherein the touch sensor is positioned on, or substantially on, a back surface of the display portion.

3. The head-mounted display as recited in claim 1 or 2, wherein the cursor lies on the line of sight between the wearer and the object.

4. The head-mounted display as recited in claim 1, 2 or 3, wherein the head-mounted display is operable to display an on-screen display in response to a touching of the touch sensor.

5. The head-mounted display as recited in claim 4, wherein the on-screen display is variable in response to variation in a pressure of the touching.

6. The head-mounted display as recited in claim 4 or 5, wherein the head-mounted display is operable to display the on-screen display only after a preliminary action.

7. The head-mounted display as recited in claim 6, wherein the preliminary action is a long-pressing action.

8. The head-mounted display as recited in any of claims 4 to 7, wherein the on-screen display is a running system picture, and optionally wherein at least one of a volume and a reproduction position is adjustable using the running system picture.

9. The head-mounted display as recited in any of claims 4 to 8, wherein the on-screen display is displayed superimposed on displayed video.

10. The head-mounted display as recited in any preceding claim, further comprising a mounting detecting portion.

11. The head-mounted display as recited in claim 10, wherein when the mounting detecting portion detects a non-mounting state the head-mounted display is rendered non-responsive to actuation of the touch sensor.

12. The head-mounted display as recited in any preceding claim, wherein when the touch sensor is not actuated for a given time or more the touch sensor is locked.

13. The head-mounted display as recited in claim 12, wherein the head-mounted display is operable to unlock the touch sensor in response to a will confirmation action.

14. A method for controlling a head-mounted display comprising displaying a cursor on a display portion of the head-mounted display at a position determined according to a line of sight between a wearer of the head-mounted display and an object external to the head-mounted display.

15. A computer-readable medium storing a computer-readable programm containing computer-executable instructions for implementing a method according to claim 14.

## Patentansprüche

1. Auf einem Kopf montierte Anzeige, umfassend:
einen Anzeigeteil und einen Berührungssensor;
**dadurch gekennzeichnet, dass** die auf einem Kopf montierte Anzeige betreibbar ist zum Anzeigen eines Cursors auf dem Anzeigeteil an einer Position, die gemäß einer Sichtlinie zwischen einem Träger der auf einem Kopf montierten Anzeige und einem Objekt außerhalb des Anzeigeteils bestimmt wird.

2. Auf einem Kopf montierte Anzeige nach Anspruch 1, wobei der Berührungssensor auf oder im Wesentlichen auf einer rückseitigen Fläche des Anzeigeteils angeordnet ist.

3. Auf einem Kopf montierte Anzeige nach Anspruch 1 oder 2, wobei der Cursor auf der Sichtlinie zwischen dem Träger und dem Objekt liegt.

4. Auf einem Kopf montierte Anzeige nach Anspruch 1, 2 oder 3, wobei die auf einem Kopf montierte Anzeige betreibbar ist zum Anzeigen einer Bildschirmanzeige in Reaktion auf eine Berührung des Berührungssensors.

5. Auf einem Kopf montierte Anzeige nach Anspruch 4, wobei die Bildschirmanzeige in Reaktion auf eine Veränderung eines Drucks der Berührung variabel ist.

6. Auf einem Kopf montierte Anzeige nach Anspruch 4 oder 5, wobei die auf einem Kopf montierte Anzeige betreibbar ist zum Anzeigen der Bildschirmanzeige nur nach einer vorangegangenen Aktion.

7. Auf einem Kopf montierte Anzeige nach Anspruch 6, wobei die vorangegangene Aktion eine lange Drückaktion ist.

8. Auf einem Kopf montierte Anzeige nach einem der Ansprüche 4 bis 7, wobei die Bildschirmanzeige ein laufendes Systembild ist, und wobei wahlweise wenigstens eines von einer Lautstärke und einer Wiedergabeposition unter Verwendung des laufenden Systembilds einstellbar ist.

9. Auf einem Kopf montierte Anzeige nach einem der Ansprüche 4 bis 8, wobei die Bildschirmanzeige überlagert über dem angezeigten Video angezeigt wird.

10. Auf einem Kopf montierte Anzeige nach einem der vorstehenden Ansprüche, ferner umfassend einen Montageerkennungsteil.

11. Auf einem Kopf montierte Anzeige nach Anspruch 10, wobei, wenn der Montageerkennungsteil einen nicht montierten Zustand erkennt, die auf einem Kopf montierte Anzeige so geschaltet wird, dass sie nicht auf Betätigung des Berührungssensors reagiert.

12. Auf einem Kopf montierte Anzeige nach einem der vorstehenden Ansprüche, wobei, wenn der Berührungssensor für eine gegebene Zeit oder länger nicht berührt wird, der Berührungssensor gesperrt wird.

13. Auf einem Kopf montierte Anzeige nach Anspruch 12, wobei die auf einem Kopf montierte Anzeige betreibbar ist zum Entsperren des Berührungssensors in Reaktion auf eine Absichtsbestätigungsaktion.

14. Verfahren zum Steuern einer auf einem Kopf montierten Anzeige, umfassend das Anzeigen eines Cursors auf einem Anzeigeteil der auf einem Kopf montierten Anzeige an einer Position, die gemäß einer Sichtlinie zwischen einem Träger der auf einem Kopf montierten Anzeige und einem Objekt außerhalb der auf einem Kopf montierten Anzeige bestimmt wird.

15. Computerlesbarer Datenträger, auf dem ein computerlesbares Programm gespeichert ist, welches von einem Computer ausführbare Anweisungen zum Implementieren eines Verfahrens gemäß Anspruch 14 enthält.

## Revendications

1. Visiocasque, comprenant :
une partie d'affichage et un capteur tactile ;
**caractérisé en ce que** le visiocasque est utilisable pour afficher un curseur sur la partie d'affichage à une position déterminée selon une ligne de visée entre un utilisateur du visiocasque et un objet externe à la partie d'affichage.

2. Visiocasque tel que décrit dans la revendication 1, dans lequel le capteur tactile est positionnée sur, ou sensiblement sur, une surface arrière de la partie d'affichage.

3. Visiocasque tel que décrit dans la revendication 1 ou la revendication 2, dans lequel le curseur se situe sur la ligne de visée entre le porteur et l'objet.

4. Visiocasque tel que décrit dans les revendications 1, 2 ou 3, dans lequel le visiocasque peut fonctionner pour afficher un affichage à l'écran en réponse à un toucher du capteur tactile.

5. Visiocasque tel que décrit dans la revendication 4, dans lequel l'affichage à l'écran est variable en réponse à la variation de pression du toucher.

6. Visiocasque tel que décrit dans la revendication 4 ou la revendication 5, dans lequel le visiocasque est utilisable pour afficher l'affichage à l'écran seulement après une action préliminaire.

7. Visiocasque tel que décrit dans la revendication 6, dans lequel l'action préliminaire est une action de longue pression.

8. Visiocasque tel que décrit dans l'une quelconque des revendications 4 à 7, dans lequel l'affichage à l'écran est une image système de passage et, optionnellement, dans lequel au moins un paramètre parmi un volume et une position de reproduction est réglable au moyen de l'image système de passage.

9. Visiocasque tel que décrit dans l'une quelconque des revendications 4 à 8, dans lequel l'affichage à l'écran est affiché en superposition sur une vidéo affichée.

10. Visiocasque tel que décrit dans l'une quelconque des revendications précédentes, comprenant en outre une partie de détection de mise en place.

11. Visiocasque tel que décrit dans la revendication 10, dans lequel lorsque la partie de détection de mise en place détecte un état de non mise en place, le visiocasque est rendu non sensible à l'actionnement du capteur tactile.

12. Visiocasque tel que décrit dans l'une quelconque des revendications précédentes, dans lequel, lorsque le capteur tactile n'a pas été actionné pendant une durée donnée, ou davantage, le capteur tactile est verrouillé.

13. Visiocasque tel que décrit dans la revendication 12, dans lequel le visiocasque est utilisable pour déverrouiller le capteur tactile en réponse à une action de confirmation de la volonté.

14. Procédé de commande d'un visiocasque comprenant d'afficher un curseur sur une partie d'affichage du visiocasque à une position déterminée suivant une ligne de visée entre un porteur du visiocasque et un objet externe au visiocasque.

15. Support lisible par ordinateur stockant un programme lisible par ordinateur contenant des instructions exécutables par ordinateur pour mettre en oeuvre un procédé selon la revendication 14.
